# FASCICULE DE BREVET EUROPEEN

(11) **EP 0 866 924 B1**
(45) Date de publication et mention de la délivrance du brevet: **28.02.2001**
(21) Numéro de dépôt: 96941721.1
(22) Date de dépôt: 09.12.1996
(51) Int. Cl.: F16F 9/346, F16F 9/34

(54) **AMORTISSEUR D'AXE LONGITUDINAL AVEC UN CANAL DE LAMINAGE**
TELESKOPDÄMPFER MIT EINEM LAMINATKANAL
SHOCK ABSORBER WITH LONGITUDINAL AXIS AND LAMINATING CHANNEL

(30) Priorité: 13.12.1995 FR 9515096
(43) Date de publication de la demande: 30.09.1998
(73) Titulaire: Etablissements Jean Perret, 74301 Cluses (FR)
(72) Inventeur: BERTRAND, Michel, F-74300 Cluses (FR); PERRET, Jean-Pierre, F-74300 Thyez (FR)
(74) Mandataire: Gasquet, Denis
(86) Numéro de dépôt international: FR9601958
(87) Numéro de publication internationale: WO9721937

(56) Documents cités:
- DE-U- 9 313 280
- FR-A- 2 137 981
- FR-A- 2 146 083
- FR-A- 2 194 267
- GB-A- 2 202 921
- US-A- 4 632 228

## Description

La présente invention concerne un amortisseur plus particulièrement destiné à servir d'élément de fin de course absorbant l'énergie et pouvant être utilisé dans toute activité nécessitant l'arrêt de masses en mouvement comme, par exemple, la fermeture de portes automatiques, les butées de convoyeurs, la robotique, les machines-outils, les appareils de musculation et autres, tels qu'éléments de presse.

Il existe de nombreux types d'amortisseurs permettant de résister aux chocs dus aux masses en mouvements et notamment un amortisseur décrit dans le brevet Allemand DE-U-9.313.280 où l'amortissement s'effectue dans un canal de laminage formé par une gorge hélicoïdale réalisée dans la paroi de la chambre de compression et un amortisseur décrit par le brevet FR-A-2.194.167 qui divulge une chemise interne indépendante à travers laquelle s'effectue le laminage. Cependant, ils se détériorent relativement rapidement, et leur capacité d'amortissement décroît au fur et à mesure de leur utilisation. Leur durée de vie n'est pas satisfaisante et des défauts dans le guidage du piston apparaissent rapidement, entraînant une usure rapide des différents composants, des fuites de fluide ou bris de ressort. En outre, ces amortisseurs ne permettent pas d'obtenir par des moyens simples une courbe d'amortissement dont les caractéristiques peuvent être adaptées en fonction du cadre spécifique d'utilisation de ceux-ci.

La présente invention se propose de résoudre ces problèmes en proposant un amortisseur dont les caractéristiques fonctionnelles et structurelles décrites ci-après permettent notamment d'augmenter sa qualité d'amortissement ainsi que sa fiabilité et sa durée de vie.

Ainsi, l'amortisseur d'axe longitudinal de révolution selon l'invention est du type constitué par :
- un corps d'amortisseur,
- un piston principal porté par une tige de piston,
- un chambre de compression principale dans laquelle coulisse le piston principal, ledit piston divisant l'intérieur de ladite chambre en une portion interne avant et une portion interne arrière, ledit piston coulissant d'avant en arrière lors de la compression de l'amortisseur,
- un dispositif élastique de rappel,
- un dispositif de compensation des volumes, avec une chambre secondaire de compensation qui est en communication hydraulique avec la chambre de compression principale,
- un fluide hydraulique,
- au moins un canal de laminage d'amortissement,
et dont ledit canal de laminage est constitué par au moins une partie cylindrique de la face interne de la paroi périphérique de la chambre de compression principale et au moins une partie de la face périphérique externe du piston principal et en ce qu'un tube cylindrique indépendant est logé dans l'intérieur du corps d'amortisseur et radialement intercalé entre le corps d'amortisseur et le piston principal, la surface cylindrique intérieure du dit tube formant la paroi périphérique de la chambre de compression et des gorges disposées dans la surface extérieure du tube cylindrique forment des gorges d'écoulement destinées à laisser s'écouler le fluide entre la chambre principale et la chambre secondaire de compensation.

Selon une variante d'exécution, la chambre de compression principale possède une face périphérique interne de section transversale circulaire dont le diamètre est variable selon l'axe longitudinal de révolution (XX').

Selon une autre variante d'exécution, la chambre de compression principale possède une face périphérique interne de section transversale circulaire dont le diamètre est constant selon l'axe longitudinal de révolution (XX').

Selon une caractéristique complémentaire, le piston principal est muni d'une paroi périphérique externe cylindrique dont le diamètre est inférieur au diamètre de la face périphérique interne de la chambre de compression principale.

Selon une autre caractéristique, le piston principal est muni sur sa paroi externe d'une saillie annulaire de laminage dont le diamètre externe est inférieur au diamètre de la face périphérique interne de la chambre de compression principale.

Selon une caractéristique complémentaire, l'amortisseur est muni d'un système d'écoulement permettant au fluide hydraulique de circuler entre la portion interne avant de la chambre de compression principale et la chambre secondaire de compensation.

Une autre caractéristique est que le dispositif de compensation des volumes est constitué d'un piston secondaire pouvant coulisser à l'intérieur de la chambre secondaire de compensation, ledit piston étant muni d'un dispositif assurant l'étanchéité de ladite chambre secondaire.

Le dispositif de rappel élastique peut être constitué d'un ressort de rappel agissant à l'encontre du coulissement dudit piston secondaire et peut être positionné en appui sur une paroi de butée solidaire du corps d'une de ses extrémités et sur la partie arrière du piston secondaire à l'autre de ses extrémités, ladite partie arrière étant celle qui n'est pas au contact du fluide hydraulique contenu dans la chambre secondaire de compensation.

D'autres avantages de l'invention se dégageront de la description qui va suivre au regard des dessins annexés qui ne sont donnés qu'à titre d'exemples non limitatifs.

Les figures 1 à 11 se rapportent au mode de réalisation préféré de l'invention.

La figure 1 est une vue en coupe selon un plan médian de l'amortisseur.

La figure 2 est une vue en coupe selon le même plan du corps de l'amortisseur.

La figure 3 est une vue en coupe selon AA de la figure 1.

La figure 4 est une vue en bout du piston principal dans son logement.

La figure 5 représente ledit piston en coupe dans le plan médian.

La figure 6 est une vue en perspective de la chambre de compression.

Les figures 7, 8 et 9 sont respectivement des vues de face en coupe et de derrière de la chambre de compression.

Les figures 10 et 11 représentent respectivement le clapet en coupe longitudinale et la vis de clapet en vue extérieure.

La figure 12 représente une variante d'exécution du piston en coupe longitudinale.

La figure 13 représente dans une vue en bout une autre variante d'exécution du piston principal.

Les figures 14 et 15 se rapportent à une autre variante d'exécution de l'ensemble tige de piston et piston principal, la figure 14 étant une vue en coupe selon un plan longitudinal, la figure 15 étant une vue en coupe selon BB.

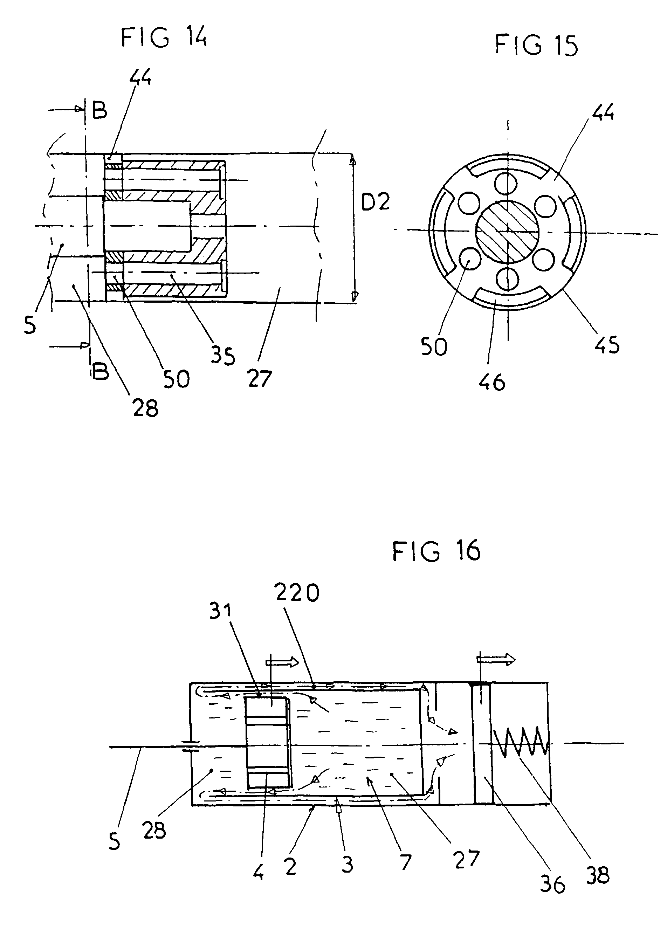

Les figures 14 à 17 présentent différents modes d'exécution de la chambre de compression principale.

La figure 16 est une vue schématique illustrant le parcours du fluide comprimé.

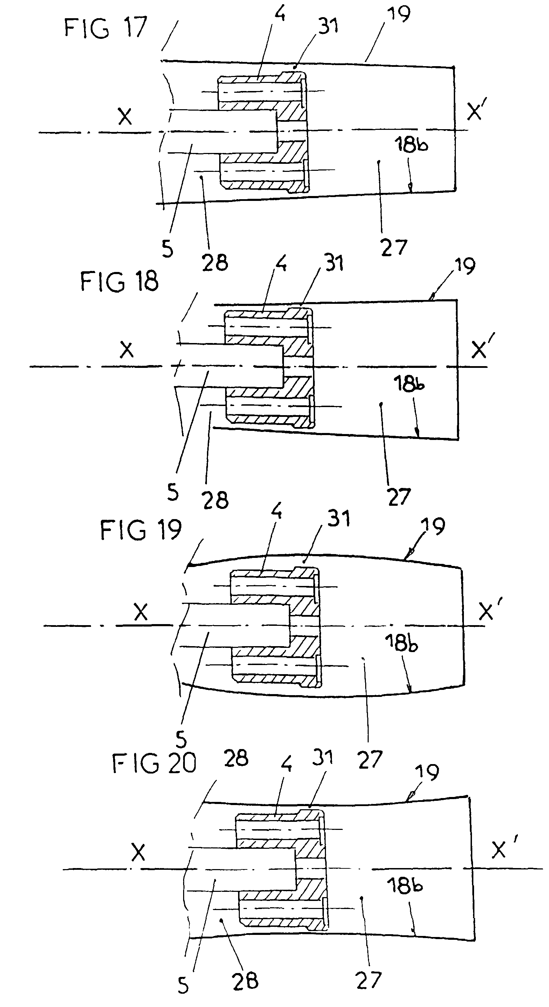

Les figures 17 à 20 représentent en coupe différentes variantes d'exécution de la chambre de compression principale à section variable.

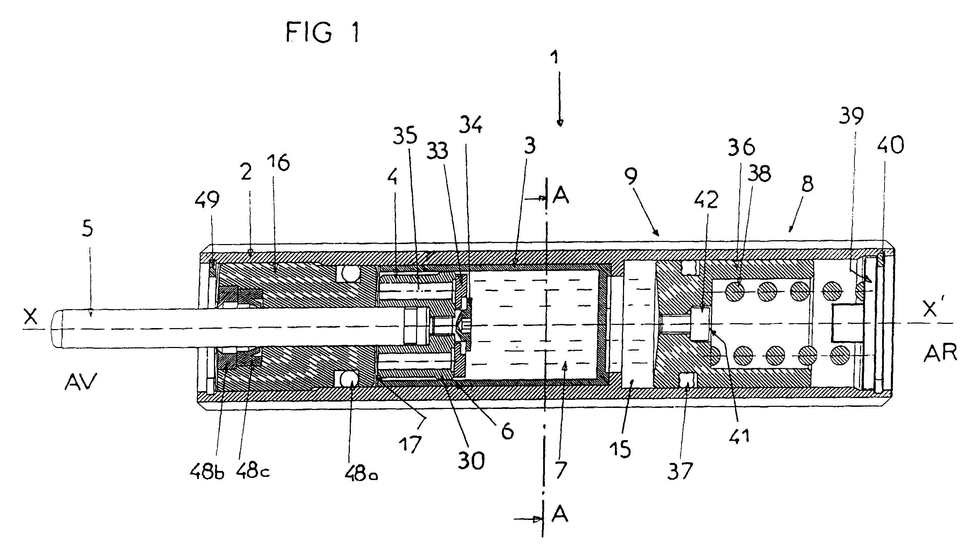

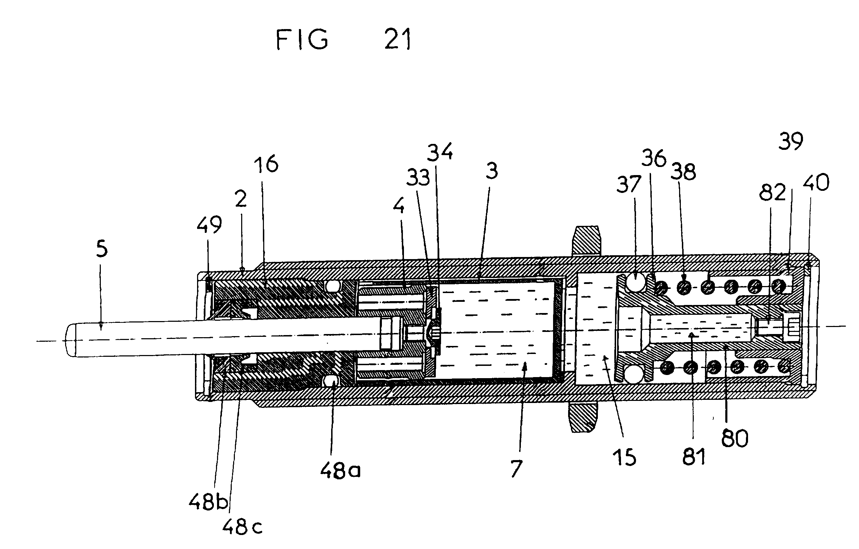

La figure 21 représente dans une vue similaire à la figure 1 une variante du mode de réalisation préféré de l'invention comportant une construction différente du dispositif de compensation des volumes.

Selon un mode de réalisation préféré de l'invention, l'amortisseur (1) illustré en figure 1 est constitué d'un corps (2), de forme cylindrique, équipé d'une chambre de compression principale (3) à l'intérieur de laquelle un piston principal (4) porté par sa tige de piston (5) peut coulisser pour se déplacer en translation d'avant (AV) en arrière (AR) et inversement. Ledit coulissement s'effectue selon un axe (XX') général de révolution de l'amortisseur (1) et se produit lors de la compression de l'amortisseur, de l'avant (AV) vers l'arrière (AR), à l'encontre d'un dispositif hydraulique d'amortissement (6) qui transforme l'énergie cinétique du piston en énergie thermique d'un fluide hydraulique (7) contenu dans le corps (2) de l'amortisseur (1), ladite énergie thermique étant dispersée ensuite dans l'air par le biais de l'échauffement dudit corps (2).

Ledit amortisseur (1) est également équipé d'un dispositif élastique de rappel (8) permettant le coulissement inverse du piston principal (4) vers sa position de repos lors de la détente de l'amortisseur (1) et d'un dispositif de compensation des volumes (9) permettant de compenser le volume pris au fluide (7) par la tige de piston (5) lors de la compression et le volume laissé ensuite par le retrait de la tige de piston (5) audit fluide (7) lors de la détente.

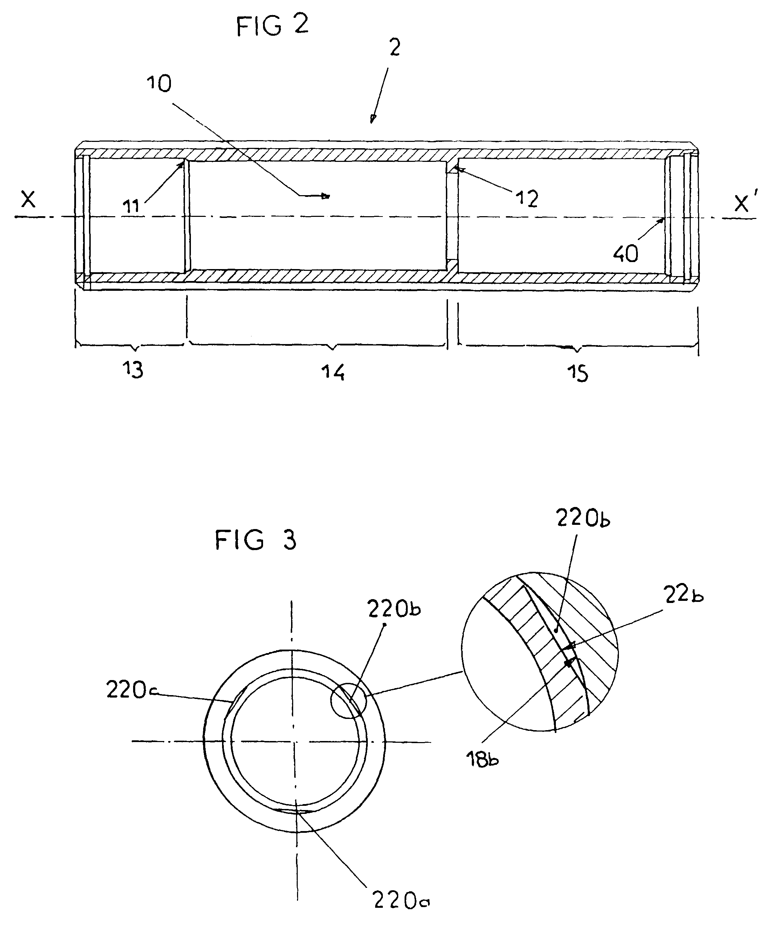

Le corps (2) de l'amortisseur (1), illustré plus particulièrement à la figure 2, est de forme cylindrique et est évidé selon son axe (XX') de révolution par un trou longitudinal cylindrique (10) se divisant en trois portions successives grâce à un rétrécissement de section (11) et à une saillie annulaire jouant le rôle de butée annulaire interne (12). Ainsi, le trou comprend :
- une portion avant (13) destinée à recevoir une bague de guidage et d'étanchéité (16),
- une portion médiane (14) destinée à recevoir la chambre de compression principale (3),
- une portion arrière, appelée chambre secondaire de compensation (15), destinée à recevoir le dispositif élastique de rappel (8) et le dispositif de compensation des volumes (9).

La portion avant (13) est donc munie d'une bague de guidage (16) permettant le guidage du coulissement de la tige de piston (5) solidaire du piston principal (4), ladite bague (16) servant également à réaliser l'étanchéité de l'amortisseur (1) dans la portion avant (13) selon des moyens d'étanchéité tels qu'un joint torique et des bagues élastiques (48a, 48b, 48c). Par ailleurs, la bague (16) est retenue dans la position avant (13) grâce à une rondelle élastique (49) plus communément appelée circlip.

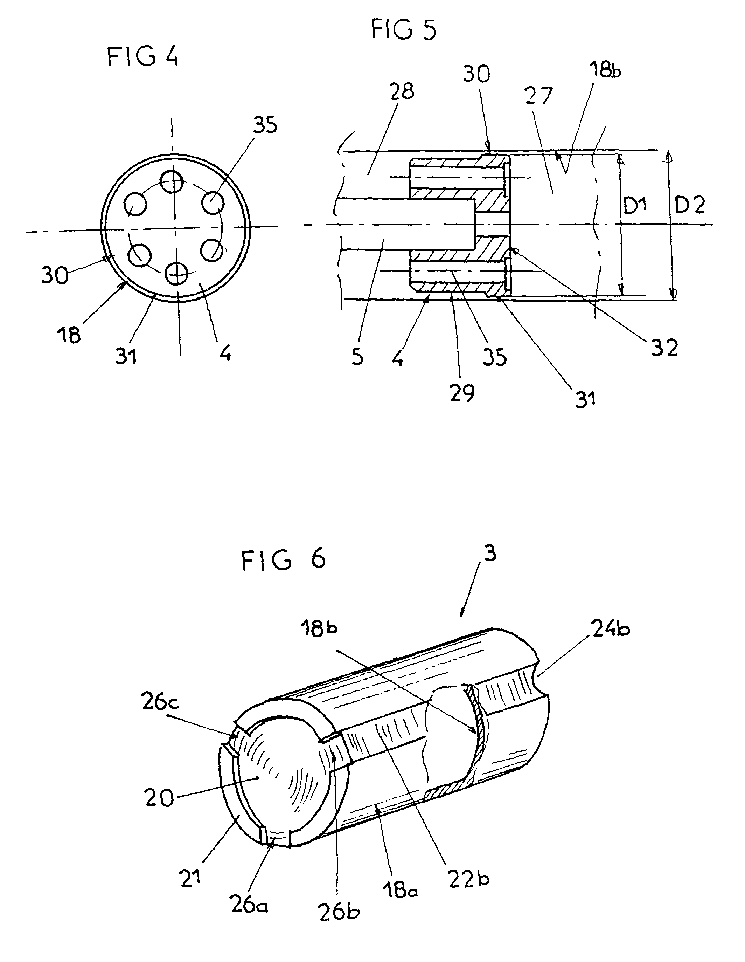

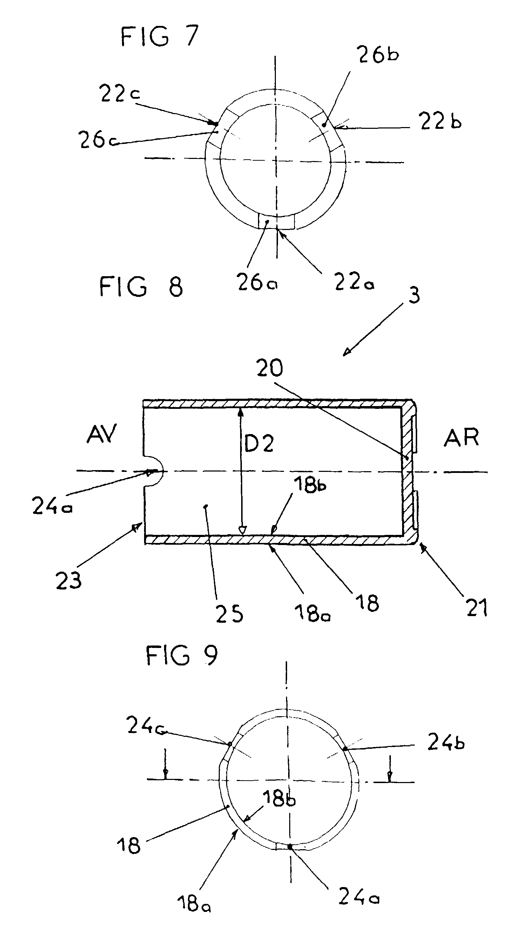

Selon le mode de réalisation préféré de l'invention, la chambre de compression principale (3) à l'intérieur de laquelle s'effectue le coulissement du piston principal proprement dit (4) est constitué par une pièce indépendante qui se trouve en appui sur la butée annulaire interne (12) du corps (2) de l'amortisseur (1) et sur la paroi d'extrémité arrière (17) de la bague de guidage (16). Ladite chambre (3) illustrée aux figures 5, 6 et 7 est constituée d'un tube cylindrique possédant une paroi tubulaire périphérique (18) ainsi qu'une paroi transversale d'extrémité arrière (20) réalisant le fond de ladite chambre. Cette chambre est ouverte dans sa partie avant et la paroi périphérique externe fait saillie vers l'arrière au-delà de la paroi d'extrémité arrière (20), cette saillie butée (21) réalise l'appui contre la butée annulaire interne (12) du corps (2).

La face externe (18a) de la paroi périphérique externe (18) cylindrique comprend trois zone longitudinales planes (22a, 22b, 22c) afin de créer trois gorges d'écoulement (220a, 220b, 220c) le long de génératrices, destinées à laisser s'écouler le fluide hydraulique (7) entre ladite face externe (18a) et le corps (2) de l'amortisseur (1). A l'extrémité avant (23) de la chambre de compression principale (3), les gorges d'écoulement se terminent par des encoches radiales avant (24a, 24b, 24c) traversant la paroi périphérique (18), permettant au fluide hydraulique (7) de circuler entre l'intérieur de la chambre (25) et lesdites gorges d'écoulement (220a, 220b, 220c). A l'extrémité arrière de la chambre (35), les gorges d'écoulement (220a, 220b, 220c) se terminent également par des encoches radiales arrières (26a, 26b, 26c) traversant la saillie butée (21) de la face périphérique externe (18), permettant la circulation du fluide hydraulique (7) entre lesdites gorges (220a, 220b, 220c) et la chambre secondaire de compensation des volumes (15).

Les encoches radiales avant (24a, 24b, 24c), arrières (26a, 26b, 26c) et les gorges d'écoulement (220a, 220b, 220c) constituent le système d'écoulement (47) du fluide hydraulique (7).

Selon ce mode de réalisation de l'invention, un piston principal (4) maintenu par sa tige de piston (5) coulisse à l'intérieur de la chambre principale de compression (3), définissant à l'arrière du piston une portion arrière interne (27) et à l'avant dudit piston une portion avant interne (28) de chambre de compression (3) dont les volumes varient lors du coulissement.

Selon le mode de réalisation préféré, ledit piston (4) illustré aux figures 1 à 5, est de forme cylindrique et possède sur la périphérie de sa paroi externe (29) une saillie annulaire de laminage (30) dont le diamètre externe (D1) est légèrement inférieur au diamètre intérieur (D2) de la paroi périphérique (18) de la chambre de compression principale (3), de manière à ce que, lors du coulissement du piston principal (4) de l'avant (AV) vers l'arrière (AR), c'est-à-dire lors de la compression, le fluide hydraulique contenu dans la portion arrière (27) de ladite chambre (3) soit laminé lors de son écoulement vers la portion avant interne (28) de la chambre (3) au travers d'un canal de laminage (31) constitué par l'espace existant entre ladite saillie annulaire de laminage (30) et la paroi périphérique (18) de la chambre de compression principale (3) et plus particulièrement sa face périphérique interne (18b). Le fluide hydraulique (7) et ladite saillie annulaire (30) ainsi que la face périphérique interne (18b) de la chambre principale (3) constituant le dispositif hydraulique d'amortissement (6) de l'amortisseur (1).

Par ailleurs, le piston (4) est muni sur son extrémité arrière (32) d'un clapet (33) maintenu par une vis de clapet (34) lui autorisant un léger débattement longitudinal entre une position fermée et une position ouverte selon (XX'). Ledit clapet (33) permet de boucher ou de déboucher des orifices de retour (35) constitués de trous longitudinaux réalisés à l'intérieur du piston (4). Selon le mode de réalisation préféré, lesdits orifices de retour (35) sont au nombre de six et sont positionnés selon une section transversale du piston (4) de manière régulière le long d'un cercle de diamètre inférieur au diamètre minimum de la paroi externe (29) du piston (4). Le système ainsi constitué fonctionne de manière connue en soi, lors de la compression, le piston (4) subit une translation de l'avant vers l'arrière et la pression du fluide (7) dans la portion arrière interne (27) de la chambre (3) pousse le clapet (33) en position fermée, les orifices de retour (35) étant bouchés, le fluide hydraulique (7) s'écoule alors par le canal de laminage (31). Lors de la détente, la pression du fluide (7) dans la portion avant interne (28) provoque l'ouverture des orifices de retour (35) en repoussant le clapet (33) dans sa position ouverte et ainsi permet l'écoulement du fluide hydraulique (7) par les orifices de retour (35), de la portion avant interne (28) vers la portion arrière interne (27) de la chambre principale (3).

Selon le mode de réalisation préféré de l'invention, le dispositif de compensation des volumes (9) est constitué d'un piston secondaire (36) muni d'une bague d'étanchéité (37) pouvant coulisser selon (XX') le long de la chambre secondaire de compensation (15) afin de permettre au fluide hydraulique (7) de s'écouler à l'intérieur de ladite chambre secondaire (15) lors de la compression, comme il sera décrit ultérieurement.

Le coulissement dudit piston secondaire (36) est géré par le dispositif élastique de rappel (8) constitué d'un ressort (38) en appui à une extrémité sur une paroi de butée (39) solidaire de l'extrémité arrière du corps (40) et à son autre extrémité sur la partie arrière du piston secondaire (41). En outre, ledit piston secondaire (36) est muni en son centre d'une vis de purge (42).

Selon une variante du mode de réalisation préféré de l'invention illustrée figure 21, le dispositif de compensation des volumes (9) comporte un piston secondaire (36) muni d'une bague d'étanchéité (37), ledit piston est porté par une tige de piston (80) et peut coulisser à l'intérieur de la chambre secondaire (15) selon l'axe (XX'). Ledit coulissement s'effectue à l'encontre d'un dispositif élastique de rappel du type de celui décrit précédemment comprenant un ressort (38). Le piston et sa tige comportent un alésage (81) débouchant à une extrémité sur la chambre secondaire de compensation (15) et étant pourvu d'une vis de purge (82) à l'autre de ses extrémités comme le montre la figure 21. Notons que selon cette variante, l'extrémité arrière de la tige de piston qui comprend la vis de purge débouche à l'extérieur du corps (2) de l'amortisseur afin de permettre notamment un accès aisé à ladite vis de purge. Selon cette variante, l'extrémité de la tige de piston (80) peut avantageusement permettre de vérifier le niveau de fluide hydraulique (7) et servir ainsi de témoin d'usure par exemple.

Ainsi, dans le premier mode d'exécution illustré aux figures 1 à 11, lors de la compression de l'amortisseur, le fluide hydraulique (7) est laminé de la portion arrière interne (27) vers la portion avant interne (28) de la chambre principale (3) par le passage de laminage (31), le volume occupé par la tige de piston (5) dans la portion avant interne (27) oblige une partie équivalente audit volume à s'écouler le long des gorges d'écoulement (220a, 220b, 220c) de l'intérieur (25) de la chambre principale de compression (3) vers le chambre secondaire de compensation (15), le fluide hydraulique (7) en pression dans ladite chambre secondaire (15) provoque la translation du piston secondaire (36) comprimant le ressort de rappel (38) jusqu'à établir l'équilibre des pressions entre la force imprimée à la tige de piston (5) et la force de rappel du ressort (38) par l'intermédiaire du fluide hydraulique (7). Lorsque la force imprimée au piston principal (4) par l'intermédiaire de sa tige (5) est supprimée, la force de rappel du ressort (38) force le fluide hydraulique (7) à emprunter le circuit inverse jusqu'à la portion avant interne (28) de la chambre principale (3) et de là, à s'écouler vers la portion arrière interne (27) par l'intermédiaire des orifices de retour (35).

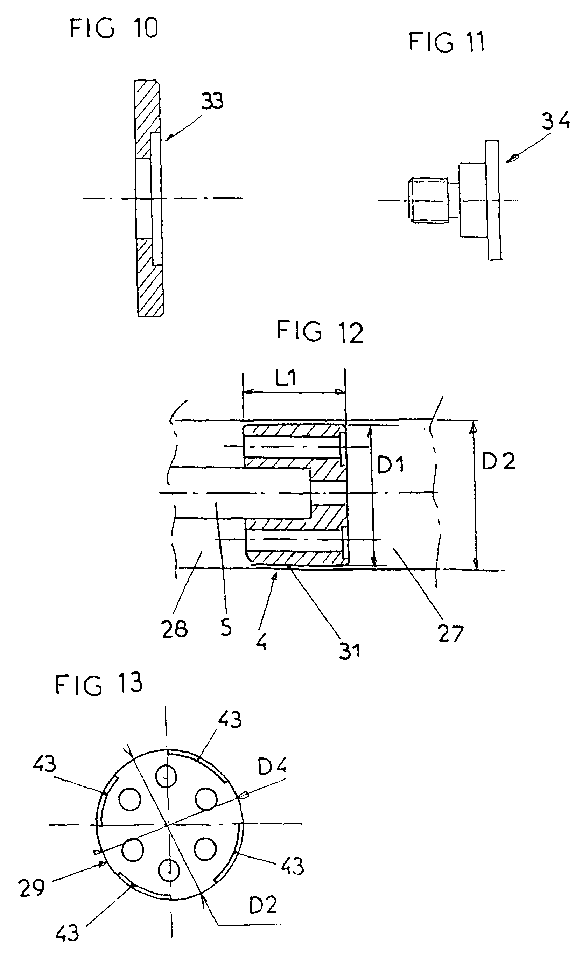

La figure 12 illustre une variante d'exécution selon laquelle le piston (4) ne possède pas de saillie de laminage (30) mais une paroi externe (29) cylindrique de diamètre (D1) légèrement inférieure au diamètre (D2) de la paroi périphérique interne (19) de la chambre de compression principale (3). Ainsi, le fluide hydraulique (7) n'est plus laminé le long de la saillie mais sur l'ensemble de la longueur (L1) du piston principal (4).

Selon une autre variante d'exécution illustrée à la figure 13, la paroi périphérique externe (29) du piston (4) est de diamètre (D4) égale au jeu de fonctionnement près au diamètre intérieur (D2) de la paroi périphérique interne (19) de la chambre (3) afin de permettre le coulissement dudit piston (4), le canal de laminage (31) étant alors constitué de gorges de laminage (43) situées le long de ladite paroi périphérique externe (29), comme le montre l'illustration. Lesdites gorges pouvant être de forme et de dimension diverses.

Selon une autre variante d'exécution illustrée aux figures 14 et 15, l'ensemble tige piston (5) et piston principal (4) peut être muni d'une rondelle intermédiaire de guidage (44) placée entre le piston (4) et la tige piston (5), solidaire de l'ensemble et qui peut être constituée d'un anneau cylindrique dont le diamètre extérieur est égal au jeu de fonctionnement près au diamètre interne (D2) de la paroi périphérique de la chambre et qui possède des dégagements d'écoulement (46) du fluide le long de sa paroi périphérique externe (45). Ladite rondelle cylindrique (44) comprenant aussi des trous (50) pôsitionnés en regard des trous (35), de manière à permettre l'écoulement du fluide hydraulique (7) par lesdits orifices de retour (35) du piston principal (4).

Dans le premier mode de réalisation et ses variantes illustré aux figures 1 à 12, le passage de laminage (31) est constant, quelle que soit la position du piston principal, mais il pourrait en être autrement, comme cela est illustré de façon schématique aux figures 17, 18, 19 et 20. Ces figures illustrent quatre variantes d'exécution selon lesquelles le diamètre intérieur (D2) de la paroi périphérique externe (18) de la chambre principale de compression (3) est variable selon l'axe (XX'), de manière à faire varier la taille du canal de laminage (31) pendant le coulissement du piston principal (4), permettant ainsi l'obtention d'un amortissement variable. La variation du diamètre intérieur (D2) peut, par exemple, être conique avec un diamètre avant supérieur au diamètre arrière, provoquant un amortissement de plus en plus fort lors de la compression, comme le montre la figure 17, ou inversement, un diamètre arrière supérieur au diamètre avant, de manière à obtenir un fort amortissement au début de la compression et un amortissement plus faible en fin de compression, illustré figure 18. On peut ainsi obtenir une courbe d'amortissement (force d'amortissement en fonction de la course du piston principal) de la forme désirée en effectuant une chambre de compression principale (3) dont on fait varier le diamètre intérieur (D2) de manière adéquate.

Selon une variante d'exécution du mode de réalisation préféré, le dispositif élastique de rappel (8) et le dispositif de compensation (9) peuvent, par exemple, être placés radialement par rapport au corps (2) de l'amortisseur (1), le ressort de rappel (38) agissant par l'intermédiaire du piston secondaire (36) sur le fluide hydraulique (7), ledit dispositif peut être placé à l'endroit désiré moyennant une modification adéquate de la configuration du corps (2).

## Revendications

1. Amortisseur (1) d'axe longitudinal de révolution (XX'), du type constitué par :
- un corps d'amortisseur (2),
- un piston principal (4) porté par une tige de piston (5),
- une chambre de compression principale (3) dans laquelle coulisse le piston principal (4), ledit piston divisant l'intérieur de ladite chambre (3) en une portion interne avant (28) et une portion interne arrière (27), ledit piston coulissant d'avant en arrière lors de la compression de l'amortisseur (1),
- un dispositif élastique de rappel (8),
- un dispositif de compensation des volumes (9) avec une chambre de compensation secondaire (15) qui est en communication hydraulique avec la chambre de compression principale (3),
- un fluide hydraulique (7),
- au moins un canal de laminage d'amortissement (31),
caractérisé en ce que le canal de laminage d'amortissement (31) est constitué par au moins une partie cylindrique de la face interne (18b) de la paroi périphérique (18) de la chambre de compression principale (3) et au moins une partie de la paroi périphérique externe (29) du piston principal (4) et en ce qu'un tube cylindrique indépendant est logé dans l'intérieur du corps d'amortisseur (2) et radialement intercalé entre le corps d'amortisseur (2) et le piston principal (4), la surface cylindrique intérieure du dit tube formant la paroi périphérique (18) de la chambre de compression principale et des gorges (220a, 220b, 220c), disposées dans la surface extérieure du tube cylindrique, forment des gorges d'écoulement destinées à laisser s'écouler le fluide hydraulique (7) entre la chambre de compression principale (3) et la chambre de compensation secondaire (15).

2. Amortisseur (1) selon la revendication 1, caractérisé en ce que la chambre de compression principale (3) possède une face périphérique interne (18b) de section transversale circulaire dont le diamètre (D2) est variable selon l'axe longitudinal de révolution (XX').

3. Amortisseur (1) selon la revendication 1, caractérisé en ce que la chambre de compression principale (3) possède une face périphérique interne (18b) de section transversale circulaire dont le diamètre (D2) est constant selon l'axe longitudinal de révolution (XX').

4. Amortisseur (1) selon l'une quelconque des revendications précédentes, caractérisé en ce que le piston principal (4) est muni d'une paroi périphérique externe (29) cylindrique dont le diamètre (D1) est inférieur au diamètre interne (D2) de la paroi périphérique (18) de la chambre de compression principale (3).

5. Amortisseur (5) selon l'une quelconque des revendications précédentes, caractérisé en ce que le piston principal (3) est muni sur sa paroi périphérique externe (29) d'une saillie annulaire de laminage (30) dont le diamètre externe (D1) est inférieur au diamètre intérieur (D2) de la chambre de compression principale (3).

6. Amortisseur (1) selon l'une quelconque des revendications précédentes, caractérisé en ce qu'il est muni d'un système d'écoulement permettant au fluide hydraulique (7) de circuler entre la portion interne avant (28) de la chambre de compression principale (3) et la chambre secondaire de compensation (15).

7. Amortisseur (1) selon l'une quelconque des revendications précédentes, caractérisé en ce que le dispositif de compensation des volumes (9) est constitué d'un piston secondaire (36) pouvant coulisser à l'intérieur de la chambre secondaire de compensation (15).

8. Amortisseur (1) selon la revendication 7, caractérisé en ce que le dispositif élastique de rappel (8) est constitué d'un ressort de rappel (38) agissant à l'encontre du coulissement dudit piston secondaire (36).

9. Amortisseur (1) selon la revendication 8, caractérisé en ce que le ressort de rappel est positionné en appui sur une paroi de butée (39) solidaire du corps (2) à une extrémité et sur la partie arrière (41) du piston secondaire (36) à son autre extrémité.

## Patentansprüche

1. Teleskopdämpfer (1) mit einer Längsachse (XX'), von der Art bestehend aus:
- einem Körper (2) desTeleskopdämpfers,
- einem von einer Kolbenstange (5) getragenen Hauptkolben (4),
- einer Hauptdruckkammer (3), in welcher der Hauptkolben (4) hin- und hergleitet, wobei der Kolben das Innere der Kammer (3) in eine vordere Innenpartie (28) und eine hintere Innenpartie (27) unterteilt, wobei der Kolben während der Komprimierung desTeleskopdämpfers (1) von vorne nach hinten gleitet,
- einer elastischen Rücksteltvorrichtung (8),
- einer Volumenausgleichvorrichtung (9) mit einer Nebenausgleichkamrner (15), die in hydraulischer Verbindung mit der Hauptausgleichkammer (3) steht,
- einer hydraulischen Flüssigkeit (7),
- mindestens einem Laminatkanal (31) desTeleskopdämpfers,
dadurch gekennzeichnet, dass der Laminatkanal (31) desTeleskopdämpfers aus mindestens einem zylindrischen Teil der Innenseite (18b) der Umfangswandung (18) der Hauptdruckkammer (3) und aus mindestens einem Teil der externen Umfangswandung (29) des Hauptkolbens (4) besteht, und dass ein unabhängiges, zylindrisches Rohr im Innern des Körpers (2) des Teleskopdämpfers untergebracht und radial zwischen dem Federungskörper (2) und dem Hauptkolben (4) eingefügt ist, wobei die innere zylindrische Oberfläche des Rohrs die Umfangswandung (18) der Hauptdruckkammer bildet, und Rinnen (220a, 220b, 220c), die in der äußeren Oberfläche des zylindrischen Rohrs angeordnet sind, Abflussrinnen zum Ablaufen der hydraulischen Flüssigkeit (7) zwischen der Hauptdruckkammer (3) und der Nebendruckkammer (15) bilden.

2. Teleskopdämpfer (1) nach Anspruch 1, dadurch gekennzeichnet, dass die Hauptdruckkammer (3) eine innere Umfangsseite (18b) mit rundem Querschnitt hat, deren Durchmesser (D2) sich gemäß der Längsdrehachse (XX') ändert.

3. Teleskopdämpfer (1) nach Anspruch 1, dadurch gekennzeichnet, dass die Hauptdruckkammer (3) eine innere Umfangsseite (18b) mit rundem Querschnitt hat, deren Durchmesser (D2) gemäß der Längsdrehachse (XX') konstant bleibt.

4. Teleskopdämpfer (1) nach irgendeinem der vorherigen Ansprüche, dadurch gekennzeichnet, dass der Hauptkolben (4) mit einer zylindrischen äußeren Umfangswandung (29) ausgestattet ist, deren Durchmesser (D1 ) kleiner als der Innendurchmesser (D2) der Umfangswandung (18) der Hauptdruckkammer (3) ist.

5. Teleskopdämpfer (1) nach irgendeinem der vorherigen Ansprüche, dadurch gekennzeichnet, dass der Hauptkolben (3) auf seiner äußeren Umfangswandung (29) mit einem ringförmigen Walzvorsprung (30) ausgestattet ist, dessen Durchmesser (D1) kleiner als der Innendurchmesser (D2) der Hauptdruckkammer (3) ist.

6. Teleskopdämpfer (1) nach irgendeinem der vorherigen Ansprüche, dadurch gekennzeichnet, dass er mit einem Abflusssystem ausgestattet ist, das es der hydraulischen Flüssigkeit (7) ermöglicht, zwischen der vorderen Innenpartie (28) der Hauptdruckkammer (3) und der Nebenausgleichkammer (15) zu fließen.

7. Teleskopdämpfer (1) nach irgendeinem der vorherigen Ansprüche, dadurch gekennzeichnet, dass die Volumenausgleichvorrichtung (9) aus einem Nebenkolben (36) besteht, der innerhalb der Nebenausgleichkammer (15) hin- und hergleiten kann.

8. Teleskopdämpfer (1) nach Anspruch 7, dadurch gekennzeichnet, dass die elastische Rückstellvorrichtung (8) aus einer Rückstellfeder (38) besteht, die gegen die Gleitbewegung des Nebenkolbens (36) wirkt.

9. Teleskopdämpfer (1) nach Anspruch 8, dadurch gekennzeichnet, dass die Rückstellfeder auf einer mit dem Körper (2) einstückigen Anschlagswandung (39) an einem Ende und auf dem hinteren Teil (41) des Nebenkolbens (36) an ihrem anderen Ende anliegend positioniert ist.

## Claims

1. Damper (1) with a longitudinal axis of revolution (XX'), of the type consisting of:
- a damper body (2),
- a main piston (4) carried by a piston rod (5),
- a main compression chamber (3) in which the main piston (4) slides, the said piston dividing the inside of the said chamber (3) into a front internal portion (28) and a rear internal portion (27), the said piston sliding from front to rear when the damper (1) is compressed,
- an elastic return device (8),
- a volume compensation device (9) with a secondary compensation chamber (15) which is in hydraulic communication with the main compression chamber (3),
- a hydraulic fluid (7),
- at least one damping throttling channel (31),
characterised in that the damping throttling channel (31) consists of at least one cylindrical part of the internal face (18b) of the peripheral wall (18) of the main compression chamber (3) and at least part of the external peripheral wall (29) of the main piston (4) and in that an independent cylindrical tube is housed inside the damping body (2) and radially interposed between the damping body (2) and the main piston (4), the internal cylindrical surface of the said tube forming the peripheral wall (18) of the main compression chamber and grooves (220a, 220b, 220c), disposed in the external surface of the cylindrical tube, form flow grooves intended to allow the hydraulic fluid (7) to flow between the main compression chamber (3) and the secondary compensation chamber (15).

2. Damper (1) according to Claim 1, characterised in that the main compression chamber (3) has an internal peripheral face (18b) with a circular transverse section whose diameter (D2) is variable along the longitudinal axis of revolution (XX').

3. Damper (1) according to Claim 1, characterised in that the main compression chamber (3) has an internal peripheral face (18b) with a circular transverse section whose diameter (D2) is constant along the longitudinal axis of revolution (XX').

4. Damper (1) according to any one of the preceding claims, characterised in that the main piston (4) is provided with a cylindrical external peripheral wall (29) whose diameter (D1) is less than the internal diameter (D2) of the peripheral wall (18) of the main compression chamber (3).

5. Damper (5) according to any one of the preceding claims, characterised in that the main piston (3) is provided on its external peripheral wall (29) with an annular throttling projection (30) whose outside diameter (D1) is less than the inside diameter (D2) of the main compression chamber (3).

6. Damper (1) according to any one of the preceding claims, characterised in that it is provided with a flow system enabling the hydraulic fluid (7) to circulate between the front internal portion (28) of the main compression chamber (3) and the secondary compensation chamber (15).

7. Damper (1) according to any one of the preceding claims, characterised in that the volume compensation device (9) consists of a secondary piston (36) able to slide inside the secondary compensation chamber (15).

8. Damper (1) according to Claim 7, characterised in that the elastic return device (8) consists of a return spring (38) acting counter to the sliding of the said secondary piston (36).

9. Damper (1) according to Claim 8, characterised in that the return spring is positioned in abutment on a stop wall (39) integral with the body (2) at one end and on the rear part (41) of the secondary piston (36) at its other end.
